# EUROPEAN PATENT APPLICATION

(11) **EP 1 813 537 A2**
(43) Date of publication of application: **01.08.2007**
(21) Application number: 07001310.7
(22) Date of filing: 22.01.2007
(51) Int. Cl.: B65D 5/42, G11B 33/02, G11B 23/04

(54) **Cartridge accomodation case**

(30) Priority: 31.01.2006 JP 2006022961
(71) Applicant: Fujifilm Corporation, Minato-ku Tokyo (JP)
(72) Inventor: Imai, Fumihito, Odawara-shi Kanagawa (JP)
(74) Representative: Höhfeld, Jochen

(57) **Abstract**

A case 100 for accommodating cartridges 27 each of which incorporates a magnetic tape reel 25 is provided with plural partitioned rooms 33 for holding respective cartridge groups in each of which plural cartridges 27 are arranged side by side in their thickness direction so as to assume a block form, and a partition 33 (grooves 53a) formed between partitioned rooms 33 arranged in the axial direction of the magnetic tape reels 25.

## Description

### FIELD OF THE INVENTION

The present invention relates to a cartridge accommodation case for accommodating (flat-body-shaped) cartridges each of which incorporates a magnetic tape reel. More particularly, the invention relates to an improved technique which increases the resistance to impact on the accommodated cartridges as well as the efficiency of the work of housing cartridges.

### BACKGROUND OF THE INVENTION

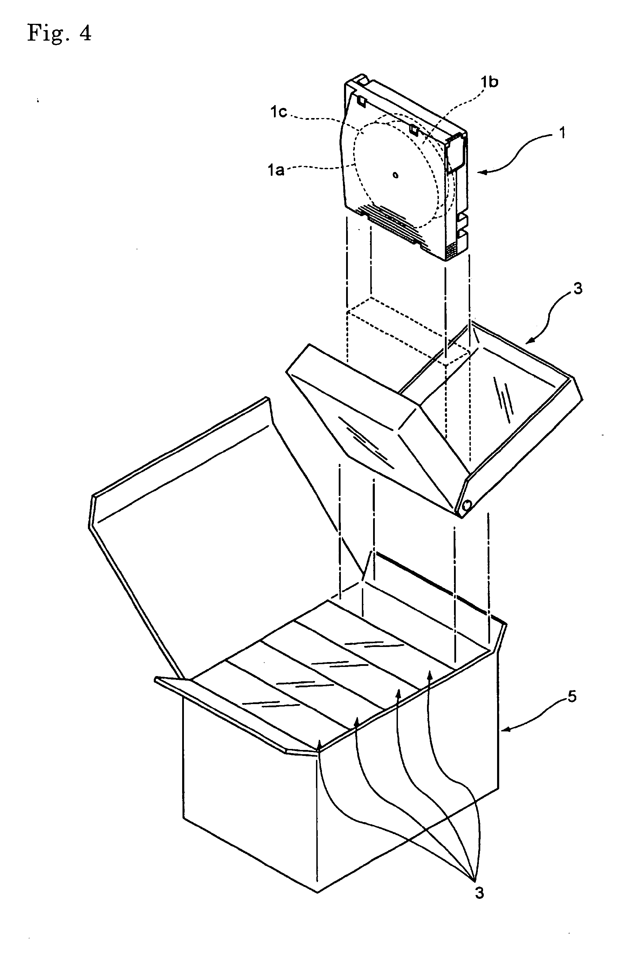

Conventionally, to pack one-reel-type magnetic recording tape cartridges together, as shown in Fig. 4, one cartridge 1 is housed in each case 3 and plural cases 3 are packed in a corrugated cardboard box 5. Necessary buffering performance is thus attained.

However, in this accumulated packing, since cartridges 1 are accommodated in a corrugated cardboard box 5, to check the presence/absence, types, etc. of cartridges 1 it is necessary to open the corrugated cardboard box 5, which is low in convenience. Another problem is that in the event of flooding a corrugated cardboard box 5 which is packed with cartridges 1 becomes wet and may be broken.

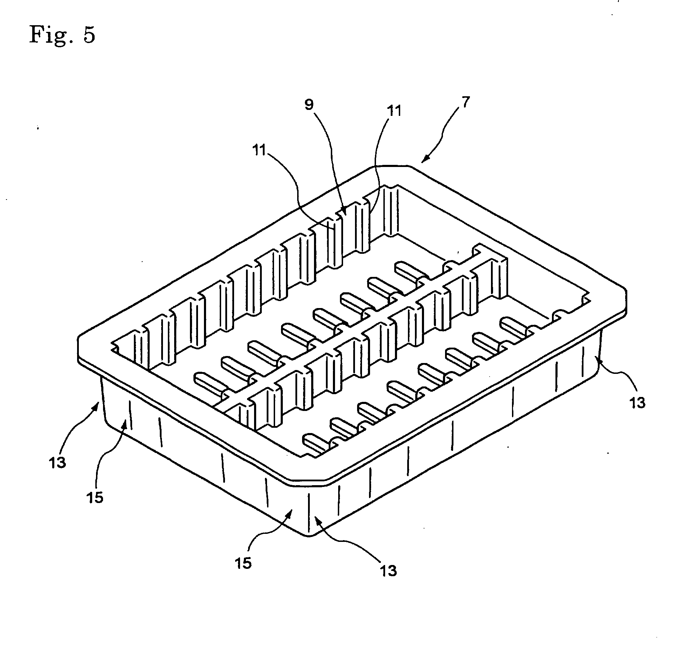

As an exemplary countermeasure against the above problems, Non-patent document ("LTO-Ultrium L-pack", [online], TDK Corp., Internet <URL: http://www.tdk.com/professional/lto/ltolpack.html>) discloses a plastic case 7 shown in Fig. 5 which is transparent (the contents are seen through it) and is not reduced in case strength even if water sticks to it. The case 7 has come to be marketed.

### SUMMARY OF THE INVENTION

Fig. 5 shows the case 7 disclosed in the above-mentioned Non-patent document. In the case 7, accommodation spaces 9 for housing individual cartridges 1 are defined by plural partitioning projections 11 and one cartridge 1 is stored in each accommodation space 9. That is, the cartridges 1 are accommodated discretely. Therefore, in actual housing work, cartridges 1 are put into the case 7 one by one, which is inconvenient particularly in the case where a large number of cartridges 1 need to be stored.

Furthermore, in the above case 7, since the accommodation spaces 9 are defined individually, the whole accommodation area (i.e., the top opening area of the case 7) is divided into equal areas corresponding to the respective accommodation spaces 9. Therefore, the weight of almost all cartridges 1 is concentrated on end case portions 13 and 15. This raises a problem that the case 7 is low in the resistance to impact and hence in the ability to absorb impact when the case 7 is dropped.

Returning to Fig. 4, in general, the cartridge 1 is vulnerable to impact that is exerted on it in the axial direction of a magnetic tape reel 1a, for the following reason. There may occur a case that a portion of a magnetic tape 1b wound around the magnetic tape reel 1a projects from the side surface of the magnetic tape 1b. If a tape edge of the projected portion of the magnetic tape 1b hits a flange 1c of the magnetic tape reel 1a, the projected portion may be crushed or bent to obstruct smooth rewinding and paying-out of the magnetic tape 1b. In the worst case, reading and writing are disabled.

Even in the above-described case 7, if impact is exerted on the case 7 in the axial direction of its magnetic tape reels of the accommodated cartridges 1, the impact is directly transmitted to the cartridges 1. Therefore, a problem remains that it is difficult to prevent each magnetic tape from contacting its flange.

The present invention has been made in view of the above circumstances, and an object of the invention is therefore to provide a cartridge accommodation case capable of realizing high efficiency of housing work and assuring the quality of cartridges by securing sufficient resistance to impact.

The above object of the invention is attained by the following configurations.
(1) A cartridge accommodation case for accommodating (flat-body-shaped) cartridges each of which incorporates a magnetic tape reel, comprising plural partitioned rooms for holding respective cartridge groups in each of which plural cartridges are arranged side by side in a thickness direction thereof so as to assume a block form; and partitions which partition an inside space of the cartridge accommodation case so as to form the partitioned rooms substantially.
   In this cartridge accommodation case, one partition is formed between partitioned rooms arranged in the axial direction of the magnetic tape reels. Therefore, when the cartridge accommodation case is dropped, an external object collides with it, or a like event occurs, the partition absorbs part of impact by serving as a cushion member and prevents the cartridges in the partitioned rooms from receiving impact. As a result, the magnetic tapes are prevented from hitting the flanges of the magnetic tape reels, and hence the magnetic tapes are kept in the prescribed winding state and the quality of the cartridges is assured.
(2) The cartridge accommodation case according to the above item (1), wherein the cartridge accommodation case is produced by performing integral forming on a plastic resin, and at least one of the partitions that is located between partitioned rooms arranged in the thickness direction of the cartridges is projected inward by forming at a prescribed height.
   The accommodation case is produced by performing integral forming on a plastic resin and one partition is projected inward by forming at a prescribed height. Therefore, the accommodation case is given a certain degree of elasticity along this partition and this partition can make some contribution to absorption of external impact. As such, the accommodation case can hold the magnetic cartridges in the prescribed winding state and thereby assure the quality of the cartridges. It is desirable that the prescribed height of the inward projection of the partition be such as to be able to hold the cartridge groups reliably. Highly accurate cases can be mass-produced easily at a low cost by using a material that can be acquired relatively easily.
(3) The cartridge accommodation case according to the above item (2), wherein the degree of inward drawing of the forming of the at least one partition in side walls of the cartridge accommodation case that are parallel with the thickness direction of the cartridges is a prescribed value corresponding to desired case elasticity.
   Since as described above the degree of inward drawing in the side walls of the accommodation case is set equal to the prescribed value corresponding to desired case elasticity, the optimum degree of drawing can balance the rigidity and the impact absorbing ability of the accommodation case. Increasing the degree of drawing is approximately the same as increasing the inward projection forming height; a problem relating to the case strength may arise if the degree of drawing is unduly high. On the other hand, if the projection forming height of the partitions 53 is too low, a problem relating to the holding of cartridges arises; that is, the case strength becomes too high and impact may be transmitted to the cartridges.
   As for the degree of drawing, it is preferable that (drawing depth) / (depth of accommodation case) be in a range of 0.4 to 0.6.
   According to this cartridge accommodation case, when it is dropped, an external object collides with it, or a like event occurs, it is bent by receiving resulting impact and hence can divert impact in the axial direction of the magnetic tape reels.
(4) The cartridge accommodation case according to any one of the above items (1) to (3), wherein the partitioned rooms are formed by placing one on the other a top case and a bottom case having the same structure and formed with projections and recesses that can engage each other, and engaging the projections and recesses with each other.
   In this cartridge accommodation case, for example, projections and recesses which can engage each other are formed symmetrically with respect to a center line of each case. A single accommodation case can be constructed by placing the two cases (top case and bottom case) having the same structure one on the other as if one case were a container and the other were a lid and engaging the projections and the recesses with each other. That is, each case can be used as either of a lid and a body. In this manner, the cartridge accommodation case can be constructed in which the partitioned rooms are formed by the two cases of one kind (formed by using a single metal die) so as to be able to be opened and closed by means of the projections and the recesses.
(5) The cartridge accommodation case according to any one of the above items (2) to (4), wherein the plastic resin contains one of polyethylene terephthalate, polypropylene, and polystyrene.
   According to this cartridge accommodation case, since the plastic resin contains one of polyethylene terephthalate, polypropylene, and polystyrene, the material can be acquired easily and vacuum forming can be performed easily at a low cost.
(6) The cartridge accommodation case according to any one of the above items (2) to (5), wherein the plastic resin is transparent.
   According to this cartridge accommodation case, even in a state that the top case and the bottom case are engaged with each other and the partitioned rooms are closed tightly, the cartridges accommodated in the partitioned rooms can be seen from the outside and hence how the cartridges are accommodated in the tightly closed partitioned rooms can be recognized easily.
(7) The cartridge accommodation case according to any one of the above items (2) to (6), wherein the cartridge accommodation case is produced by drawing a sheet of the plastic resin that is 0.5 to 2.0 mm in thickness.

Since this cartridge accommodation case is formed by drawing a plastic resin sheet of 0.5 to 2.0 mm in thickness, minimum necessary structure-dependent strength of the partitioned rooms for accommodating plural cartridge groups can be secured economically and the weight of the entire accommodation case can be minimized while its minimum necessary strength is satisfied. Since the accommodation case is formed by working on a sheet of the above thickness, a proper degree of deformation can be caused in the accommodation case when external force is applied to it. Optimum impact absorbing action for the accommodated cartridges canbe realized. That is, if a sheet used is unduly thin, deformation is caused too easily and the impact absorbing effect is lowered. On the other hand, a sheet used is unduly thick, deformation is not caused easily and impact is transmitted directly to the cartridges. This configuration enables formation of optimum impact absorbing portions (crushable zones) by setting the thickness of a plastic resin sheet in the above-mentioned range.

According to this cartridge accommodation case according to the invention, even if impact is exerted on it in the axial direction of the magnetic tape reels when it is dropped, an external object collides with it, or a like event occurs, the partitions absorb part of the impact and thereby prevent the magnetic tapes from hitting the flanges of the magnetic tape reels. The quality of the cartridges can thus be assured. Furthermore, the accommodation case is produced by performing integral forming on a plastic resin and one partition is projected inward by forming at the prescribed height. Therefore, the accommodation case is given a certain degree of elasticity along this partition and this partition can make some contribution to absorption of external impact. As such, the accommodation case can hold the magnetic cartridges in the prescribed winding state and thereby assure the quality of the cartridges. Still further, since in a partition forming process the degree of drawing in the side walls of the accommodation case is set equal to the prescribed value corresponding to desired case elasticity, the optimum degree of drawing can balance the rigidity and the impact absorbing ability of the accommodation case.

### BRIEF DESCRIPTION OF THE DRAWINGS

Fig. 1 is an exploded perspective view of a cartridge accommodation case according to the present invention being separated into a top case and a bottom case.
Figs. 2A and 2B are a plan view and a side view, respectively, of the bottom case shown in Fig. 1.
Fig. 3 is a perspective view of the cartridge accommodation case of Fig. 1 in a state that the top case and the bottom case are combined together.
Fig. 4 is an explanatory diagram showing a conventional corrugated cardboard box accommodation method.
Fig. 5 is a perspective view of a conventional accommodation case.

### DETAILED DESCRIPTION OF THE INVENTION

A cartridge accommodation case according to a preferred embodiment of the present invention will be hereinafter described in detail with reference to the drawings.

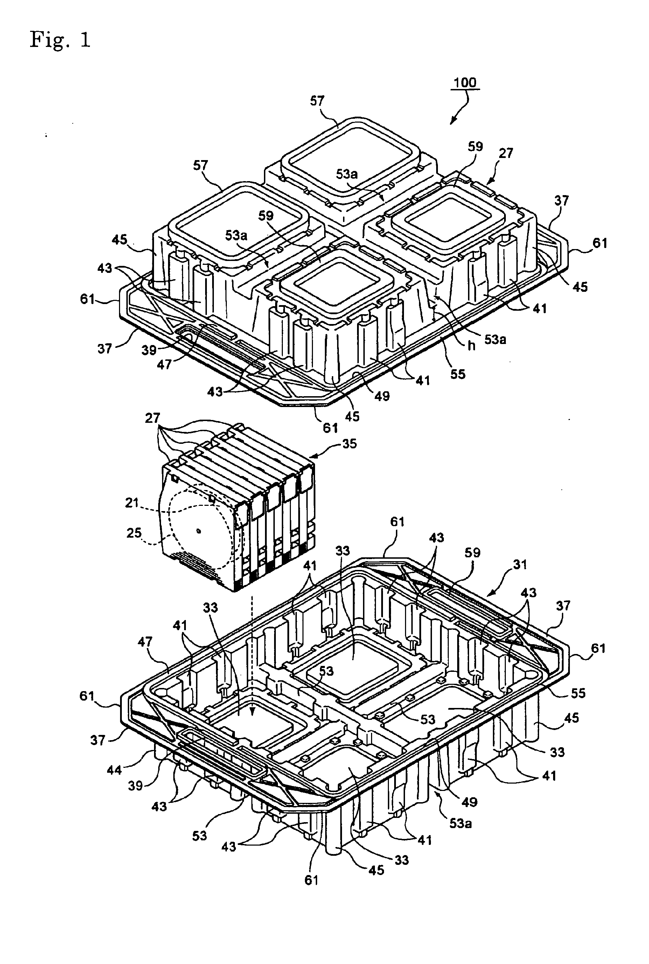

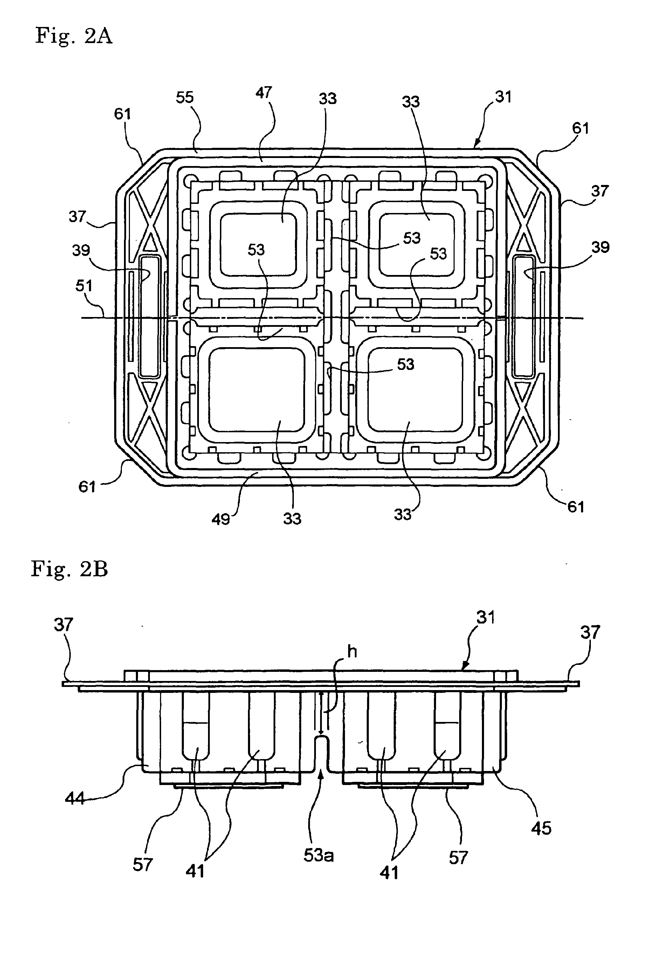

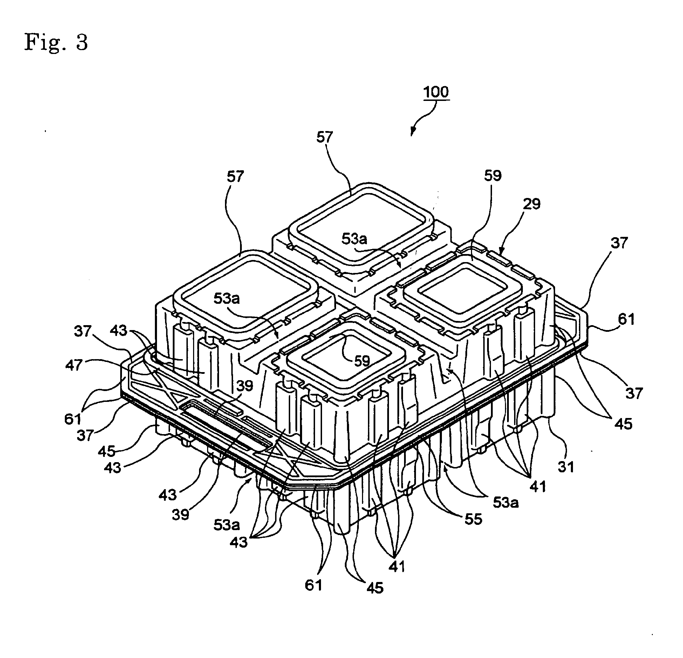

Fig. 1 is an exploded perspective view of the cartridge accommodation case according to the invention being separated into a top case and a bottom case. Figs. 2A and 2B are a plan view and a side view, respectively, of the bottom case shown in Fig. 1. Fig. 3 is a perspective view of the cartridge accommodation case of Fig. 1 in a state that the top case and the bottom case are combined together.

The cartridge accommodation case (hereinafter also referred to simply as "accommodation case") 100 according to the embodiment can be used suitably for housing flat-body-shaped cartridges 27 each of which incorporates a magnetic tape reel 25 in which a magnetic tape 21 is wound inside a pair of flanges 23.

Each cartridge 27 incorporates the magnetic tape reel 25 in such a manner that its axial direction coincides with the thickness direction of the cartridge 27. Although the embodiment is directed to an exemplary case that each cartridge 27 is a square flat body, each cartridge 27 may have other shapes such as a rectangular flat body shape.

The accommodation case 100 can be opened and closed because a top case 29 and a bottom case 31 having the same structure are placed one on the other and engaged with each other. Plural partitioned rooms 33 are formed inside by engaging the top case 29 and the bottom case 31 with each other. In this embodiment, each of the top case 29 and the bottom case 31 is an integral formed body of a plastic resin. In this manner, the top case 29 and the bottom case 31 which are strong enough to protect the cartridges 27 reliably and have a proper impact absorbing ability can be mass-produced easily at a low cost by using a material that can be handled relatively easily.

In this embodiment, four partitioned rooms 33 are formed. As shown in Fig. 1, each partitioned room 33 can hold a cartridge group 35 in which plural cartridges 27 are arranged side by side in their thickness direction so as to assume a block form. As shown in Fig. 1, cartridges 27 are oriented in such a manner that their tape access mouths, which are low is strength, are located sideways so as to be adjacent to the center lines of the accommodation case 100. It is even preferable that the tape access mouths of a cartridge group 35 accommodated in one partitioned room 33 be opposed to the tape access mouths of a cartridge group 35 accommodated in another partitioned room 33. In this case, the tape access mouths are located adjacent to the one center line of the accommodation case 100 and can be protected from impact coming from outside the accommodation case 100.

In this embodiment, the accommodation capacity of each partitioned room 33 is approximately equal to the volume of a cartridge group 35 consisting of five cartridges 27. Therefore, even if cartridges 27 are put carelessly into the partitioned rooms 33, the cartridges 27 can be set in place easily because each partitioned room 33 has no internal partition walls. For example, one can grip two or three cartridges 27 together and put them into a partitioned room 33, which makes the efficiency of housing work much higher than in conventional cases with which it is necessary to grip and insert cartridges one by one.

Since plural cartridges 27 are accommodated together in block form, a wider surplus area that does not contribute to accommodation can be secured than in a case that plural cartridges 27 are accommodated discretely in the same accommodation area. In the accommodation case 100, the surplus area portions are used as impact absorbing portions (what is called "crushable zones").

More specifically, flanges 37 as impact absorbing portions extend sideways at both ends, in the axial direction of the magnetic tape reels 25 of the accommodated magnetic tapes 21, of each of the top case 29 and the bottom case 31. A handle hole 39 is formed in each flange 37 by cutting away a rectangular central portion. That is, one can carry or lift up the accommodation case 100 formed by engaging the top case 29 and the bottom case 31 with each other by inserting a hand (fingers) into the handle holes 39 of one opposed pair of flanges 37 (the other opposed pair of flanges 37 is located down) . It is also possible to carry the accommodation case 100 in the horizontal direction or lift it up in the vertical direction by inserting both hands into the handle holes 39 of both opposed pairs of flanges 37.

In general, cartridges are vulnerable to impact that is exerted in the reel axial direction, for the following reason. There may occur a case that a portion of a wound magnetic tape projects from its side surface. If a tape edge of the projected portion of the magnetic tape hits a reel flange, the projected portion may be crushed, bent, or deformed otherwise to obstruct smooth rewinding and paying-out of the magnetic tape. In the worst case, reading and writing are disabled. In this embodiment, since the flanges 37 as impact absorbing portions are provided at both ends in the reel axial direction of the accommodated cartridges 27, the resistance to impact in the reel axial direction (the cartridges 27 themselves are vulnerable to impact in this direction) is increased.

On the other hand, one wall, corresponding to the top case 29 or the bottom case 31, of each partitioned room 33 is formed with first buffer ribs 41. The first buffer ribs 41 are projections that are arranged in the axial direction of the magnetic tape reels 25 of the cartridges 27 accommodated in the partitioned room 33. The other wall, corresponding to the top case 29 or the bottom case 31, of each partitioned room 33 is formed with second buffer ribs 43. The second ribs 43 are projections that are arranged in the direction perpendicular to the axial direction of the magnetic tape reels 25.

In addition, a third buffer rib 45 is formed in the corner portion, corresponding to the top case 29 or the bottom case 31, of each partitioned room 33 so as to surround an edge of a cartridge 27.

The accommodation case 100 is composed of the top case 29 and the bottom case 31 which have the same structure and have projections (projection strips) 47 and recesses (grooves) 49 that can engage each other. In this embodiment, as shown in Fig. 2A, the projection strip 47 (above) and the groove 49 (below) are formed symmetrically with respect to the case center line 51 so as to surround the four partitioned rooms 33. That is, in each of the top case 29 and the bottom case 31, the projection strip 47 is formed continuously in a bracket shape on one side of the case center line 51 and the groove 49 is formed continuously in a bracket shape on the other side of the case center line 51.

When the top case 29 and the bottom case 31 which are made of a flexible resin and have the same structure are placed one on the other and combined together, the projection strips 47 go into and engage the grooves 49. As a result, the partitioned rooms 33 are closed so tightly as to attain waterproofness and the accommodation case 100 can even float on the water. Furthermore, the cartridges 27 can be protected from dust, moisture, splashed water, and other harmful substances. The same case can be used as either of a lid and a body. Therefore, in the accommodation case 100, the partitioned rooms 33 are formed by the two cases of one kind (formed by using a single metal die) so as to be able to be opened and closed by means of the projection strips 47 and the grooves 49.

Partitions 53 are provided between the partitioned rooms 33. The partitions 53 are formed in such shapes and with such heights (described later) as to be deformed easily by impact. That is, when the accommodation case 100 is dropped, the curved surface shapes of the partitions 53 are deformed and the impact is thereby reduced with the aid of the elasticity of the resin material itself. In this embodiment, as for the impact absorption structures including the curved surface shapes of the partitions 53, the partitions 53 are formed in cross form so as to provide the four partitioned rooms 33 so that the accommodation case 100 can accommodate both of a case that it is dropped with the arrangement direction of the flanges 37, that is, the axial direction of the magnetic tape reels 25, coincident with the vertical direction and a case that it is dropped with the arrangement direction of the flanges 37 coincident with the horizontal direction. The partitions 53 are projected inward at the time of integral forming of the top case 29 and the bottom case 31.

The one of the crossed partitions 53 that extends in the axial direction of the magnetic tape reels 25 is smaller in height than the other partition 53. Therefore, when the accommodation case 100 is dropped, an external object collides with it, or a like event occurs, the accommodation case 100 can more easily absorb impact in the axial direction of the magnetic tape reels 25 and hence can reduce resulting impact on the cartridges 27 in the partitioned rooms 33. As a result, the side surfaces of the magnetic tapes 21 can be prevented from hitting the flanges 23 of the magnetic tape reels 25, whereby the magnetic tapes 21 can be kept in the prescribed winding state and the quality of the cartridges 27 can be maintained.

The partitions 53 may be such that only portions adjacent to the bottom walls of the partitioned rooms 33 are projected inward at the time of forming and that the side walls of each of the top case 29 and the bottom case 31 are kept flat. However, in this embodiment, the side walls of each of the top case 29 and the bottom case 31 are also drawn in a forming process of projecting the partitions 53 inward. At this time, for example, when the bottom case 31 is seen from the outside as shown in Fig. 2B, the higher partition 53 corresponds to a groove 53a in a side wall. Therefore, in this embodiment, formation of the higher partition 53 having a prescribed height is the same in meaning as formation of the grooves 53a by drawing of a prescribed degree.

Since the groove 53a is formed in the above-described manner, in the side walls of the each of the top case 29 and the bottom case 31 the length h between the grooves 53a and the flanges 37 is surely smaller than the depth of the side walls. The rigidity of each of the top case 29 and the bottom case 31 is low at the grooves 53a. Therefore, when the accommodation case 100 is dropped, it is bent mainly at the grooves 53a and the flanges 37. When impact is absorbed by such bending, a bend that inclines the reel axial line becomes more remarkable. As a result, the direction of impact which would otherwise cause the side surfaces of the magnetic tapes 21 to be pressed against the flanges 23 of the magnetic tape reels 25 is changed and hence damaging of the magnetic tapes 21 is made less likely.

As for the relationship between the side wall length h and the side wall depth, where, for example, the accommodation case 100 is made of PS (polystyrene) and the thickness of a pre-forming sheet material is 1.2 mm, it is most appropriate that the ratio of the drawing depth to the case depth be set at 0.55. In this manner, the ratio is set as appropriate depending on the strength of the material used.

The rigidity and the impact absorbing ability of the accommodation case 100 can be given optimum balance by setting the degree of drawing at the groove 53a (in the side walls) of each of the top case 29 and the bottom case 31 at a prescribed value corresponding to desired case elasticity. Increasing the degree of drawing means shortening the side wall length h; a problem relating to the case strength may arise if the degree of drawing is unduly high. On the other hand, if the projection forming height of the higher partition 53 is too low, a problem relating to the holding of cartridges 27 arises; that is, the case strength becomes too high and impact may be transmitted particularly in the reel axial direction.

When the cartridge accommodation case 100 is dropped, an external object collides with it, or a like event occurs, it can divert impact in the axial direction of the magnetic tape reels 25 by being bent by the impact.

Large rectangular frames 57 and small rectangular frames 59 which can be loosely fitted into the frames 57 expand outward from the bottom walls of the partitioned rooms 33. Even if accommodation cases 100 are stacked in the vertical direction, the bottom rectangular frames 57 and 59 of an upper accommodation case 100 are fitted with or into the top rectangular frames 59 and 57 of a lower accommodation case 100, whereby relative horizontal deviation is restricted and the stacked accommodation cases 100 are prevented from collapsing.

For example, the plastic resin as the material used in the embodiment may contain polyethylene terephthalate, polypropylene, or polystyrene, in which case the material can be acquired easily, waste accommodation cases 100 can be collected and reused, and vacuum forming can be performed easily at a low cost.

It is preferable that the plastic resin be transparent. In this case, even in a state that the top case 29 and the bottom case 31 are engaged with each other to close the partitioned rooms 33 tightly, the cartridges 27 accommodated in the partitioned rooms 33 can be seen from the outside. Therefore, one can easily recognize how the cartridges 27 are accommodated in the partitioned rooms 33 which are closed tightly.

Since the top case 29 and the bottom case 31 are formed by drawing a plastic resin sheet of 0.5 to 2.0 mm in thickness, minimum necessary structure-dependent strength of the partitioned rooms 33 for accommodating plural cartridge groups 35 can be secured economically and the weight of the entire accommodation case 100 can be minimized while its minimum necessary strength is satisfied. Since the top case 29 and the bottom case 31 are formed by working on a sheet whose thickness is in the above-mentioned range, a proper degree of deformation can be caused in the accommodation case 100 when external force is applied to it. Optimum impact absorbing action for the accommodated cartridges 27 can be realized. That is, if a sheet used is unduly thin, deformation is caused too easily and the impact absorbing effect is lowered. On the other hand, a sheet used is unduly thick, deformation is not caused easily and impact is transmitted directly to the cartridges 27. The configuration of the embodiment enables formation of optimum impact absorbing portions (crushable zones) by setting the thickness of a plastic resin sheet in the above-mentioned range.

Since the top case 29 and the bottom case 31 are combined together as shown in Fig. 3, when the accommodation case 100 accommodating cartridge groups 35 is dropped, one of the flanges 37 first hits a floor or the ground and impact is exerted on the accommodation case 100 in the axial direction of the magnetic tape reels 25. The flange 37 is deformed and thereby absorbs part of the impact energy. However, if the impact energy is large, the one partition 53 (grooves 53a) itself that extends perpendicularly to the axial direction of the magnetic tape reels 25 is bent and thereby absorbs another part of the impact by serving as a cushion member. At the same time, the first buffer ribs 41 and the third buffer ribs 45 are bent and thereby absorb still another part of the impact. In this manner, the magnetic tapes 21 are prevented from hitting the flanges 23 of the magnetic tape reels 25 and can thereby be kept in the prescribed winding state.

Therefore, according to the above-described cartridge accommodation case 100, even if impact is exerted on it in the axial direction of the magnetic tape reels 25 when it is dropped, an external object collides with it, or a like event occurs, the partitions 53 absorb part of the impact and thereby prevent the magnetic tapes 21 from hitting the flanges 23 of the magnetic tape reels 25. At the same time, the flanges 37 and the grooves 53a absorb another part of the impact. The quality of the cartridges 27 can thus be assured. Furthermore, the partitioned rooms 33 are formed which hold cartridge groups 35 in each of which plural cartridges 27 are arranged side by side in their thickness direction so as to assume a block form. Since plural cartridges 27 are gathered into a block form, it is not necessary to house plural cartridges one by one as in the conventional case. Since plural cartridges 27 that are held being placed one on another in their thickness direction can be put into each partitioned room 33, cartridges 27 can be housed efficiently in a short time, that is, the efficiency of housing work can be increased to a large extent.

This application is based on Japanese Patent application JP 2006-22961, filed January 31, 2006, the entire content of which is hereby incorporated by reference, the same as if set forth at length.

## Claims

1. A case for accommodating cartridges each of which incorporates a magnetic tape reel, comprising:
plural partitioned rooms for holding respective cartridge groups in each of which plural cartridges are arranged side by side in a thickness direction thereof so as to assume a block form; and
partitions which partition an inside space of the case so as to form the partitioned rooms substantially.

2. The case according to claim 1, wherein the case is produced by performing integral forming on a plastic resin, and at least one of the partitions that is located between partitioned rooms arranged in the thickness direction of the cartridges is projected inward by forming at a prescribed height.

3. The case according to claim 2, wherein the degree of inward drawing of the forming of the at least one partition in side walls of the case that are parallel with the thickness direction of the cartridges is a prescribed value corresponding to desired case elasticity.

4. The case according to claim 1, wherein the partitioned rooms are formed by placing one on the other a top case and a bottom case having the same structure and formed with projections and recesses that can engage each other, and engaging the projections and recesses with each other.

5. The case according to claim 2, wherein the plastic resin contains one of polyethylene terephthalate, polypropylene, and polystyrene.

6. The case according to claim 2, wherein the plastic resin is transparent.

7. The case according to claim 2, wherein the case is produced by drawing a sheet of the plastic resin, the sheet having a thickness of from 0.5 to 2.0 mm.
